# EUROPEAN PATENT APPLICATION

(11) **EP 4 586 085 A1**
(43) Date of publication of application: **16.07.2025**
(21) Application number: 23876412.0
(22) Date of filing: 06.09.2023
(51) Int. Cl.: G06F 9/451

(54) **INTERFACE DISPLAY METHOD AND APPARATUS, TERMINAL DEVICE, AND STORAGE MEDIUM**

(30) Priority: 14.10.2022 CN 202211260674
(71) Applicant: GUANGDONG OPPO MOBILE TELECOMMUNICATIONS CORP., LTD., Dongguan, Guangdong 523860 (CN)
(72) Inventor: WEI, Jiabai, Dongguan, Guangdong 523860 (CN)
(74) Representative: Novagraaf Technologies
(86) International application number: PCT/CN2023/117221
(87) International publication number: WO 2024/078207

(57) **Abstract**

Embodiments of the present application provide an interface display method and apparatus, a terminal device, and a storage medium. The interface display method comprises: after detecting a first touch operation on an application interface displayed on a first display screen, creating a virtual display screen; establishing the mapping relationship between the virtual display screen and a second display screen, the mapping relationship being used for mapping the content of the virtual display screen to the second display screen; moving an application container where the application interface is located from the first display screen to the virtual display screen; and adjusting the application container, such that the length of the adjusted application container is less than or equal to the length of the second display screen, and the width of the adjusted application container is less than or equal to the width of the second display screen.

## Description

The present application claims the priority of the Chinese patent application No. 202211260674.6, filed on October 14, 2022, in the title of " INTERFACE DISPLAYING METHOD AND APPARATUS, TERMINAL DEVICE, AND STORAGE MEDIUM", contents of which are incorporated herein by its entireties.

### TECHNICAL FIELD

Embodiments of the present disclosure relate to the technical field of displaying, and more specifically, to an interface displaying method and apparatus, a terminal device, and a storage medium.

### BACKGROUND

Currently, an application interface displayed on one screen may be pushed to another screen to be displayed. Since various application interfaces have fixed lengths and widths, when the application interface is displayed on the another screen, interface elements may not be fully displayed or may overlap with each other, leading to abnormal display of the application interface.

### SUMMARY

The present disclosure provides an interface displaying method and apparatus, a terminal device, and a storage medium, so as to avoid abnormal display of application interfaces.

In a first aspect, the present disclosure provides an interface displaying method, including:
after detecting a first touch operation performed on an application interface displayed on a first display screen, creating a virtual display; establishing a mapping relationship between the virtual display and a second display screen, wherein the mapping relationship is used to map contents of the virtual display to the second display screen;
moving an application container in which the application interface is contained from the first display screen to the virtual display; and
adjusting the application container to enable a length of the adjusted application container to be less than or equal to a length of the second display screen and enable a width of the adjusted application container to be less than or equal to a width of the second display screen.

In a second aspect, the present disclosure provides an interface displaying apparatus, including:
a creation unit, configured to create, after detecting a first touch operation performed on an application interface displayed on a first display screen, a virtual display;
a mapping unit, configured to establish a mapping relationship between the virtual display and a second display screen, wherein the mapping relationship is used to map contents of the virtual display to the second display screen;
a moving unit, configured to move an application container in which the application interface is contained from the first display screen to the virtual display; and
an adjustment unit, configured to adjust the application container to enable a length of the adjusted application container to be less than or equal to a length of the second display screen and enable a width of the adjusted application container to be less than or equal to a width of the second display screen.

In a third aspect, the present disclosure provides a terminal device, including: a first display, a second display, a processor and a memory. The first display, the second display, and the memory are coupled to the processor; the memory is configured to store a computer program, the computer program includes program instructions, the processor is configured to invoke the program instructions to perform the method in the first aspect.

In a fourth aspect, the present disclosure provides a computer readable storage medium, having a computer program stored thereon. The computer program includes program instructions. The program instructions, when being executed by a processor, are configured to cause the processor to perform the method in the first aspect.

In a fifth aspect, the present disclosure provides a computer program product. The computer program product includes a computer program, the computer program includes program instructions. The program instructions, when being executed by a processor, may cause the processor to perform the method in the first aspect.

According to the interface displaying method in the embodiments of the present disclosure, after detecting the first touch operation performed on the application interface displayed on the first display screen, a virtual display may be created, a mapping relationship between the virtual display and a second display screen may be established. The mapping relationship is used to map contents of the virtual display to the second display screen. An application container in which the application interface is contained is moved from the first display screen to the virtual display. The application container is adjusted, such that a length of the adjusted application container is less than or equal to a length of the second display screen, and a width of the adjusted application container is less than or equal to a width of the second display screen. In the present disclosure, the application interface is originally displayed on the first display screen. After moving the application container containing the application interface to the virtual display, contents in the application interface in the application container on the virtual display may be mapped to the second display screen. In this way, the application interface originally displayed on the first display screen may be pushed to be displayed on the second display screen. Since the length of the application container is less than or equal to the length of the second display screen and the width of the application container is less than or equal to the width of the second display screen, when the contents of the application interface in the application container are mapped to the second display screen, interface elements being incompletely displayed or overlapping with each other may be prevented, displaying abnormalities during the application interface being moved from the first display screen to the second display screen may be avoided.

### BRIEF DESCRIPTION OF THE DRAWINGS

To more clearly illustrate technical solutions in the embodiments of the present disclosure or the related art, the accompanying drawings needed for describing the embodiments of the present disclosure or the related art will be briefly introduced in the following. Obviously, the drawings in the following description are only some embodiments of the present disclosure, and any ordinary skilled person in the art may obtain other drawings based on these drawings without creative work.
FIG. 1 is a flow chart of an interface displaying method according to an embodiment of the present disclosure.
FIG. 2 is an interaction schematic view of pushing an application interface displayed on a first display screen to a second display screen to be displayed according to an embodiment of the present disclosure.
FIG. 3 is a flow chart of pushing the application interface displayed on the first display screen to the second display screen to be displayed according to an embodiment of the present disclosure.
FIG. 4 is a flow chart of another interface displaying method according to an embodiment of the present disclosure.
FIG. 5 is an interaction schematic view of pulling the application interface displayed on the second display screen back to the first display screen to be displayed according to an embodiment of the present disclosure.
FIG. 6 is a flow chart of pulling the application interface displayed on the second display screen back to the first display screen to be displayed according to an embodiment of the present disclosure.
FIG. 7 is a structural schematic diagram of an interface displaying apparatus according to an embodiment of the present disclosure.
FIG. 8 is a structural schematic diagram of a terminal device according to an embodiment of the present disclosure.

### DETAILED DESCRIPTIONS

Technical solutions in the embodiments of the present disclosure will be clearly and completely described by referring to the accompanying drawings. Obviously, the described embodiments are only a part of, not all of, the embodiments of the present disclosure. All other embodiments, which are obtained by any ordinary skilled person in the art based on the embodiments of the present disclosure without creative work, shall fall within the scope of the present disclosure.

Terms "first", "second", and so on, used in the specification, claims, and drawings of the present disclosure are used to distinguish different objects, instead of describing a specific order. In addition, terms "include", "have" and any variations thereof are intended to cover non-exclusive inclusion. For example, a process, a method, a system, a product, or a device including a series of steps or units is not limited to listed steps or units, but may further include steps or units that are not listed or include steps or units that are inherently included in the process, the method, the system, the product, or the device.

Reference to "embodiment" in the present disclosure means that specific features, structures, or characteristics described an embodiment may be included in at least one embodiment of the present disclosure. The term used in various sections in the specification does not necessarily refer to one same embodiment nor an independent or alternative embodiment that is mutually exclusive with other embodiments. Any ordinary skilled person in the art shall explicitly and implicitly understand that the embodiments described in the present disclosure can be combined with other embodiments.

A terminal device involved in the embodiments of the present disclosure may be a device having displaying capabilities. The terminal may be a mobile phone, a tablet computer, laptop, an ultra-mobile personal computer (UMPC), a netbook, a personal digital assistant (PDA), an on-board unit (OBU), a wearable device (such as a watch, a bracelet, a smart helmet, and so on), a smart home device (such as a rice cooker, a speaker, a home steward device, and so on), an augmented reality (AR)/virtual reality (VR) device, and so on.

An application interface displayed on one display screen may be pushed to another display screen to be displayed. Since many application interfaces have fixed lengths and widths, when the application interface is displayed on the another screen interface elements may not be fully displayed or may overlap with each other in the case that an area of the first display screen is different from an area of the second display screen or a ratio of a length to a width of the first display screen is different from that of the second display screen. In this case, the application interface may be displayed abnormally.

According to the interface displaying method in the embodiments of the present disclosure, after detecting the first touch operation performed on the application interface displayed on the first display screen, a virtual display may be created, a mapping relationship between the virtual display and a second display screen may be established. The mapping relationship is used to map contents of the virtual display to the second display screen. An application container in which the application interface is contained is moved from the first display screen to the virtual display. The application container is adjusted, such that a length of the adjusted application container is less than or equal to a length of the second display screen, and a width of the adjusted application container is less than or equal to a width of the second display screen. In the present disclosure, the application interface is originally displayed on the first display screen. After moving the application container containing the application interface to the virtual display, contents in the application interface in the application container on the virtual display may be mapped to the second display screen. In this way, the application interface originally displayed on the first display screen may be pushed to be displayed on the second display screen. Since the length of the application container is less than or equal to the length of the second display screen and the width of the application container is less than or equal to the width of the second display screen, when the contents of the application interface in the application container are mapped to the second display screen, interface elements being incompletely displayed or overlapping with each other may be prevented, displaying abnormalities during the application interface being moved from the first display screen to the second display screen may be avoided. Detailed technical solutions will be described in the following.

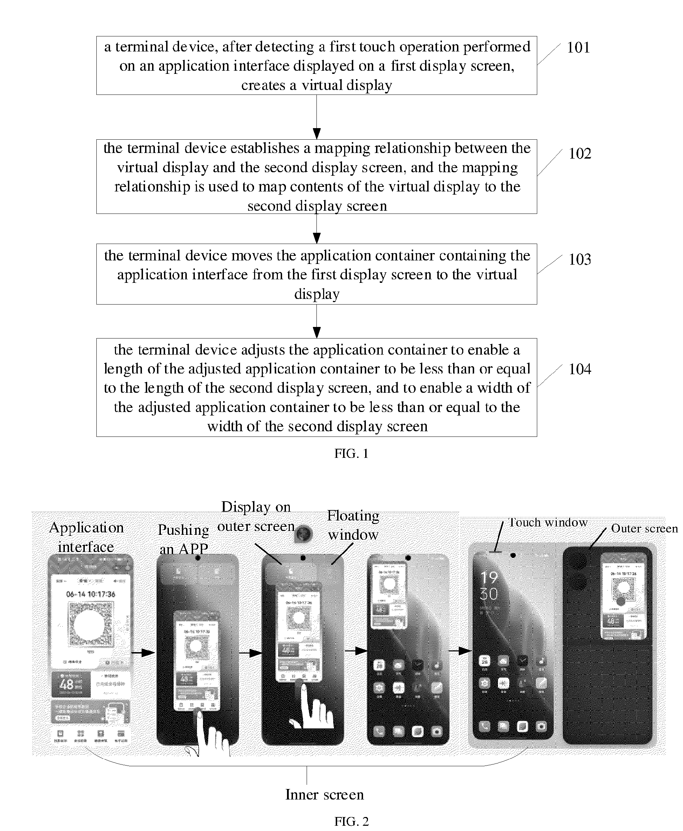

As shown in FIG. 1, FIG. 1 is a flow chart of an interface displaying method according to an embodiment of the present disclosure. As shown in FIG. 1, the method may include following blocks.

101, a terminal device, after detecting a first touch operation performed on an application interface displayed on a first display screen, creates a virtual display.

In the present embodiment, the first display screen may be a touch screen. The first touch operation may include at least one of: a sliding operation and a clicking operation. The sliding operation may include: sliding upward, sliding downward, sliding leftward, or sliding rightward. The clicking operation may include: a single click, a double click, a triple click, or a quadruple click.

The touch screen refers to a display screen having a touch input capability.

The application interface displayed on the first display screen may be a current application interface displayed on the first display screen or an application interface of a recent task card on the first display screen. The recent task card may be a card of an application that is recently run on the first display screen. For example, on the mobile phone, recently-running applications may be viewed, and each application may be displayed in a form of a card.

The application interface may include an interface of one application or interfaces of at least two applications.

In some embodiments, the application interface may include an interface of at least one application.

In the present embodiment, when the application interface includes the interface of at least one application, the interface of at least one application (for example, interfaces of at least two applications may be displayed when the terminal device displaying contents in a split-screen) may be projected to another display screen (the second display screen) to be displayed thereon. The present embodiment may be applied to displaying one application interface on a plurality of physical display screens having different resolutions.

In the present embodiment, a plurality of application interfaces displayed on one display screen (the first display screen) may be combined and projected to another display screen (the second display screen) to be displayed. Alternatively, one application interface may be projected to a plurality of display screens (second display screens) having different sizes.

The virtual display may be referred to as a virtual screen or a virtual monitor. The virtual display is invisible to a user. The virtual display may be created by native components of the Android system.

102, the terminal device establishes a mapping relationship between the virtual display and the second display screen, and the mapping relationship is used to map contents of the virtual display to the second display screen.

The second display screen may be a touch screen or a display screen without the touch input capability.

The first display screen may be one display screen. The second display screen may be one display screen or at least two display screens.

An area of the first display screen may be different from an area of the second display screen, or a ratio of a length to a width of the first display screen may be different from that of the second display screen.

The area of the first display screen being different from the area of the second display screen may mean that the area of the first display screen is greater than the area of the second display screen. For example, the first display screen may be an inner screen of a foldable screen, and the second display screen may be an outer screen of the foldable screen. Alternatively, the area of the first display screen may be smaller than the area of the second display screen. For example, the first display screen may be a display screen of the mobile phone, and the second display screen may be a display screen of a tablet computer or a television.

Each of the first display screen and the second display screen may be a physical display screen. For example, each of the first display screen and the second display screen may be a liquid crystal display (LCD) screen, a light-emitting diode (LED) display screen, or an organic light-emitting diode (OLED) display screen.

In an embodiment, the terminal device may include the first display screen and the second display screen. The terminal device may include a plurality of display screens, and the first display screen and the second display screen may be any two of the plurality of display screens included in the terminal device. For example, the first display screen and the second display screen may respectively be the inner screen (which may be a master display screen) and the outer screen (which may be a secondary screen) of the foldable screen of the terminal device. Generally, a size of the inner screen is larger than that of the outer screen, and a resolution of the inner screen is higher than that of the outer screen. For example, the resolution of the inner screen may be 1960*1080, and the resolution of the outer screen may be 640*480. The resolution herein refers to a screen resolution or a display resolution.

In an embodiment, the terminal device may include the first display screen, and the second display screen may be arranged in another electronic device. For example, the first display screen may be a display screen of the tablet computer, and the second display screen may be the display screen of the mobile phone. The first display screen of the terminal device and the second display screen of the electronic device may perform screen communicate. The application interface on the first display screen may be projected to the second display screen to be displayed.

After establishing the mapping relationship between the virtual display and the second display screen, the contents of the virtual display may be mapped to the second display screen. After establishing the mapping relationship, contents displayed on the second display screen may be the contents of the virtual display.

The first touch operation performed on the application interface displayed on the first display screen may be detected by a desktop application.

The first touch operation may be an upward sliding gesture performed on the current application interface or an upward sliding gesture performed on the application interface of the recent task card.

During creating the virtual display, the virtual display has no content. When performing the block 102, although the mapping relationship between the virtual display and the second display screen is established, the second display screen does not display any content since the virtual display has no content.

103, the terminal device moves the application container containing the application interface from the first display screen to the virtual display.

In the present embodiment, the application interface may be the interface of one application or the interfaces of at least two applications. The application container may be a container that carries at least one application interface. In the Android system, the application interface may be represented as an activity. Each application may correspond to one application container (Task), and the application container may carry at least one activity of the corresponding application. One application may correspond to a plurality of activity windows, and the application interface that is currently displayed on the first display screen is an activity at a highest level (such as at a bottom layer) in the application container.

A task may be the application container, and the activity may fill the application container. Generally, a first activity added to the task may be at a bottom of the task (a lowest level), and a last activity added to the task may be at a top (a highest level). Removing an activity from the task starts from removing the top, meaning that a first activity removed out of the task is the last activity added to the task.

After creating the virtual display, the application container containing the application interface is moved from the first display screen to the virtual display, and in this case, the virtual display now has only one application container, i.e., the application container containing the application interface, and the contents displayed on the virtual display may be contents of the application container.

104, the terminal device adjusts the application container to enable a length of the adjusted application container to be less than or equal to the length of the second display screen, and to enable a width of the adjusted application container to be less than or equal to the width of the second display screen.

A size of the application container may be adjusted by the OplusPuttmanagerService.

In the present embodiment, after moving the application container containing the application interface from the first display screen to the virtual display, the contents of the virtual display (i.e., the contents of the application interface in the application container) may be mapped to the second display screen due to the mapping relationship between the virtual display and the second display screen being established.

In the present embodiment, in a case that a device has a plurality of physical display screens, seamless switching of a same application interface across different display screens having different sizes and/or having different resolutions may be achieved, and the display compatibility of the application interface being displayed in different physical display screens may be achieved at a systemic level. An application does not need to be specifically adapted for display screens having different sizes (such as for an irregular-shaped display screen). Performance of applications on the irregular-shaped display screens and a third-party ecosystem may be improved, workload of adapting applications to different display screens may be reduced, greatly facilitating expansion and promotion of the third-party application ecosystem.

The block 102 may be executed after the block 101 or after the block 104.

Since the application container containing the application interface is previously on the first display screen, the size of the application container is adapted to the size of the first display screen instead of the size of the second display screen. In the case that the area of the first display screen is different from the area of the second display screen, or when the ratio of the length to the width of the first display screen is different from that of the second display screen, after moving the application container to the virtual display, in order to adapt the size of the application container to the size of the second display screen, the application container needs to be adjusted, such that the length of the adjusted application container may be less than or equal to the length of the second display screen, and the width of the adjusted application container may be less than or equal to the width of the second display screen.

It should be noted that the application interface is within the application container, and therefore, after the size of the application container is adjusted, the size of the application interface may be adjusted accordingly. Generally, the size of the application interface is the same as the size of the application container.

In an embodiment, the second display screen may be lit up after executing the block 104. After the size of the application container is adjusted, the second display screen is lit up, such that the contents displayed on the second display screen after being lit up may be the contents of the application interface in the adjusted application container. In this way, the user is prevented from viewing a process of adjusting the application interface on the second display screen, improving the user experience.

In another embodiment, the second display screen may be lit up before executing the block 104.

In the present embodiment, the application interface is originally displayed on the first display screen. After moving the application container containing the application interface to the virtual display, the contents of the application interface in the application container on the virtual display may be mapped to the second display screen, such that the application interface originally displayed on the first display screen may be pushed to and displayed on the second display screen. The length of the application container is less than or equal to the length of the second display screen, and the width of the application container is less than or equal to the width of the second display screen, and therefore, the interface elements may not be incompletely displayed or overlapped with each other when the contents of the application interface in the application container are mapped to the second display screen. In this way, display abnormalities are avoided when the application interface is moved from the first display screen to the second display screen.

In some embodiments, the ratio of the length to the width of the first display screen is different from that of the second display screen, the ratio of the length to the width of the virtual display is equal to that of the second display screen, and an area of the virtual display is greater than or equal to an area of the second display screen.

The block 104 may specifically include following blocks.
(11) The terminal device adjusts the ratio of the length to the width of the application container to match that of the virtual display.
(12) The terminal device adjusts a scaling factor of the application container, such that the length of the adjusted application container is equal to the length of the second display screen, and the width of the adjusted application container is equal to the width of the second display screen.

In the present embodiment, when creating the virtual display, the ratio of the length to the width of the virtual display may be set to be equal to that of the second display screen. When adjusting the size of the application container at a later stage, the ratio of the length to the width of the application container may be directly adjusted according to the ratio of the virtual display. The area of the virtual display is greater than that of the second display screen, ensuring that the virtual display may be applicable for a larger application container.

After adjusting the ratio of length to the width of the application container to match that of the virtual display, the scaling factor of the application container is adjusted, such that the length of the adjusted application container is equal to the length of the second display screen, and the width of the adjusted application container is equal to the width of the second display screen. In this way, it is ensured that the size of the adjusted application container matches the size of the second display screen. In this way, the contents of the application interface in the application container may fully fill the second display screen without any display abnormality, and a displaying effect when the application interface is pushed from the first display screen to the second display screen is improved.

In some embodiments, the area of the virtual display is larger than the area of the first display screen. After moving the application container containing the application interface from the first display screen to the virtual display, the virtual display may carry the application container.

In some embodiments, in the block 101, the terminal device creating the virtual display includes following operations.

The terminal device creates a surface view and notifies, through the surface view, a device management service to create the virtual display.

In the present embodiment, the surface view may be created in the Android system.

After the desktop application (Launcher) detects the first touch operation, the OplusPuttmanagerService may be triggered to start a push service (puttService), and the puttService starts pushing. The puttService creates the surface view and notifies, through the surface view, the device management service (DisplayManagerService) to create the virtual display.

The Launcher may be a desktop launcher in the Android system and may be one of major program components of the Android system. The device management service may one of the major program components of the Android system.

In some embodiments, in the block 102, the terminal device establishing the mapping relationship between the virtual display and the second display screen includes following operations.

The terminal device binds the surface view to a shell container of the second display screen and directs contents carried by the surface view to the virtual display.

In the present embodiment, the surface view is bound to the shell container of the second display screen, i.e., a mapping relationship between the surface view and the second display screen is established. The contents displayed on the second display screen may be contents of the shell container of the second display screen. The contents carried by the surface view being directed to the virtual display may allow the contents of the virtual display to be mapped to the surface view.

The surface view may be bound to the shell container of the second display screen, the contents carried by the surface view may be directed to the virtual display, such that the mapping relationship between the virtual display and the second display screen is established.

In the present embodiment, a mechanism of mapping the contents of the virtual display to the surface view is applied, the size of the application container containing the application interface is adjusted to enable the application interface to be perfectly displayed on a physical display screen (the second display screen) having a smaller resolution. In this way, the display compatibility issues caused by the displaying screen having the smaller size may be solved. The application does not need to be specifically adapted for different screen sizes (such as for the irregular-shaped display screen), performance of the application on the irregular-shaped display screen and the third-party ecosystem may be improved, and the workload of adapting the application to the display screens having different sizes may be reduced, greatly facilitating expansion and promotion of the third-party application ecosystem.

The push management service, the push service, and the shell container of the second display screen may be newly created program components in the Android system for implementing functions of starting the pushing, pulling back of the pushing, and exiting the pushing.

For starting the pushing, the user may push the current interface to a first hot zone (such as an upper-left hot zone) by performing an upward sliding gesture. After releasing a finger, the current interface switches from being displayed on the inner screen to being displayed on the outer screen, and at this moment, the inner screen displays a desktop.

For pulling back the pushing, the user may click a touch window (such as a handle) at a top of the inner screen or drag the touch window downward to pull a QR code interface back to the inner screen to be displayed.

For exiting the pushing, when the application interface is pushed to the outer screen to be displayed, a touch window is displayed at a top of the outer screen application interface, the user may drag the touch window on the outer screen downwardly, such that the application corresponding to the application interface may exit from the outer screen and may be moved to a background.

In some embodiments, the first touch operation may include: sliding the application interface displayed on the first display screen to the first hot zone. The first hot zone is configured to prompt the user to push the application interface to the second display screen to be displayed.

In the present embodiment, the first hot zone may be configured to prompt the user that, after pushing the application interface to the first hot zone, the application interface may be pushed to be displayed on the second display screen.

The user may use the finger to slide the application interface upward or downward, and after sliding the application interface upward or downward to reach the first hot zone, the user may release the finger, such that the first touch operation is completed.

The application interface being slid to the first hot zone means that a part of the application interface locates inside the first hot zone.

The first hot zone may be displayed on the first display screen in advance (for example, the first hot zone may be displayed before the first touch operation being detected), or the first hot zone may be displayed during performing the first touch operation (for example, the first hot zone may be displayed when a sliding distance of the first touch operation is greater than or equal to a first threshold).

The first hot zone displayed on the first display screen may prompt the user to complete the first touch operation, assisting the user to quickly push the application interface to the second display screen to be displayed, such that starting the pushing may be completed.

In some embodiments, sliding the application interface displayed on the first display screen to the first hot zone includes following operations.

When the sliding distance of the first touch operation is greater than or equal to the first threshold, the terminal device displays the first hot zone on the first display screen and slides the application interface displayed on the first display screen to the first hot zone.

In the present embodiment, the first hot zone may be displayed during the first touch operation being performed, prompting in time the user to push the application interface to the second display screen to be displayed.

The first threshold may be preset and stored in a memory of the terminal device (such as a non-volatile memory).

In some embodiments, the method shown in FIG. 1 may further include the following operations.

When the sliding distance of the first touch operation is greater than or equal to a second threshold, the terminal device displays a second hot zone on the first display screen. The second hot zone is configured to prompt the user that the application interface is displayed in a floating window. The second hot zone is located at a different position from the first hot zone.

In the present embodiment, the second hot zone may be displayed during performing the first touch operation to prompt, in time, the user that the application interface is displayed in the floating window. When the user slides the application interface to the second hot zone, the application interface may be displayed in the floating window.

The second threshold may be preset and stored in the memory of the terminal device (such as the non-volatile memory). The second threshold may be equal to or different from the first threshold.

In some embodiments, after executing the block 104, following operations may further be executed.

The terminal device displays the touch window on the first display screen. The touch window is configured to prompt the user to move the contents displayed on the second display screen to the first display screen to be displayed.

The touch window may be displayed at any location on the first display screen. For example, the touch window may be displayed at an edge of the first display screen (such as an upper edge, a lower edge, a left edge, or a right edge). Specifically, the touch window may be displayed on the upper edge of the first display screen. The touch window may be displayed in a form of a "handle" (as shown in FIG. 2).

The user may slide or click the touch window to pull the application interface displayed on the second display screen back to the first display screen to be displayed. After pushing the application interface displayed on the first display screen to the second display screen to be displayed, a touch window is provided for the user to pull the application interface displayed on the second display screen back to the first display screen to be displayed. In this way, the user may quickly switch the application interface between being displayed on the first display screen and being displayed on the second display screen, improving the user experience.

In some embodiments, after executing the block 104, the following operations may further be executed.

The terminal device may display the desktop on the first display screen.

In the present embodiment, after pushing the application interface displayed on the first display screen to the second display screen to be displayed, the application interface is no longer displayed on the first display screen, and the desktop may be displayed on the first display screen.

In the present embodiment, after the terminal device displays the desktop on the first display screen, the following operations may further be executed.

When a touch operation performed on a second application is detected on a first display interface, the second application is run.

In the block 101, the application interface displayed on the first display screen may be the application interface of a first application. The first application and the second application may be different applications.

After displaying the desktop on the first display screen, the user may perform operations on the first display screen to run an application interface of another application (the second application). In this way, one application interface may be displayed on the first display screen, and another application interface may be displayed on the second display screen. Different applications may be displayed on two different display screens, which may be applied to scenarios where two application interfaces need to be displayed simultaneously. For example, after the user pushes the application interface of the first application (such as a QR code interface) displayed on the first display screen to the second display screen to be displayed, the user may run the second application (such as an entertainment application) on the first display screen. The QR code interface may be displayed to others or may be scanned for payment. In this way, requirements of displaying the QR code and demands of the user for entertainment may both be satisfied. The requirements of displaying the QR code and the demands of the user for entertainment may both be satisfied through the foldable screen of the terminal device, and privacy of the user may be ensured as the second application is opened on the first display screen (inner screen).

As shown in FIG. 2, FIG. 2 is an interaction schematic view of pushing the application interface displayed on the first display screen to the second display screen to be displayed according to an embodiment of the present disclosure. In FIG. 2, the terminal device is a foldable phone, and the application interface is the QR code interface.

As shown in FIG. 2, firstly, the QR code interface (application interface) may be displayed on the inner screen (first display screen). The user slides the QR code interface upwardly on the inner screen (i.e., exits the application), and two hot zones are displayed at the top of the inner screen. The two hot zones display "Display on outer screen" (first hot zone) and "Floating window" (second hot zone). The user continues to slide the QR code interface upwardly on the inner screen, moves the QR code interface to reach the hot zone of "Display on outer screen", and then releases the finger. The QR code interface is pushed to an upper-left corner of the inner screen and disappears from the inner screen. The QR code interface is pushed to the outer screen to be displayed. The inner screen displays a desktop, and a handle (touch window) is displayed at the upper-left corner of the inner screen. The QR code interface may be pulled back to the inner screen (not shown in FIG. 2) by pulling down the handle.

By sliding upwardly on the inner screen, the QR code interface displayed on the inner screen may be pushed to the outer screen to be displayed, an efficiency of switching the application interface being displayed between the two display screens may be improved.

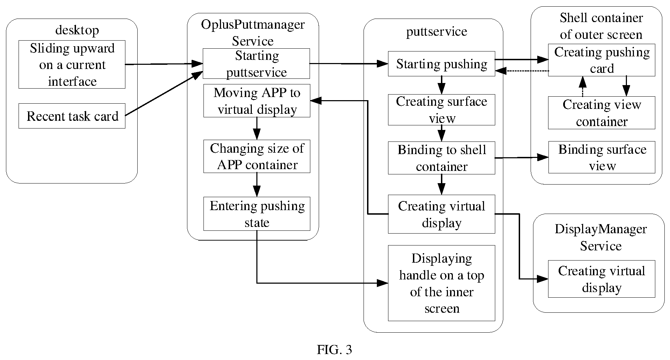

As shown in FIG. 3, FIG. 3 is a flow chart of pushing the application interface displayed on the first display screen to the second display screen to be displayed according to an embodiment of the present disclosure.

After the desktop (Launcher) detects the first touch operation (the upward sliding gesture performed on a current interface or the touch operation performed on the recent task card, such as clicking a button on the recent task card), the push management service (OplusPuttmanagerService) may be triggered to start the PuttService, the PuttService is triggered to start the pushing. The PuttService creates the surface view, binds the surface view to a shell container of the outer screen, and notifies, through the surface view, the device management service (DisplayManagerService) to create the virtual display. After creating the virtual display, the OplusPuttmanagerService moves the application (the application container containing the application interface) to the virtual display, changes the size of the application container, and notifies the system to enter a pushing state, and the pushing service displays the handle at the top of the inner screen.

The Android system may create one push management service (OplusPuttmanagerService), which is configured to receive a message from the Launcher to start the pushing; lauch the PuttService; and interact with other modules.

Capabilities of the push management service (OplusPuttmanagerService) may be as follows.
a. The OplusPuttmanagerService may receive invoking from the Launcher to start the pushing, pull back the pushing, or exit the pushing.
b. The OplusPuttmanagerService may bind/unbind the PuttService.
c. When the pushing is started, the application container (task) containing the current application interface (activity) may be moved to the virtual display; when pulling back the pushing, the application container (task) may be moved from the virtual display back to the inner screen. The current activity may be understood as the application interface that is currently visible in a foreground.
d. The OplusPuttmanagerService may adjust a boundary size of the task containing the activity from the ratio of length to the width of the inner screen (such as 21:9) to the ratio of the length to the width of the outer screen (such as 16:9). In addition to adjusting the ratio of the task, the task may be scaled proportionally (the scaling factor may be set) to match the size of the outer screen (during pulling back the pushing or exiting the pushing, the ratio of the length to the width of the task is adjusted from the ratio of the outer screen to the ratio of the inner screen, and the scaling factor is canceled).
e. The OplusPuttmanagerService may obtain a customized screen brightness for the application and notify the power management service (PowerManagerService) during the process of entering or exiting the pushing and dynamically change brightness of the inner screen and/or outer screen. The PowerManagerService may be a native power management service in the Android system, configured to light up or light off the display screen of the terminal device.
f. The OplusPuttmanagerService may implement an actively screen-on logic. The inner screen may be lit up based on capabilities of a screen switching module (DisplayFoldControler). The DisplayFoldControler may be a native module in the Android system, configured to control screen switching of a screen-foldable device.
g. The OplusPuttmanagerService may provide a capability for a business party to register and monitor for changes in a push state. The business party may be an application that draws the top handle or any self-developed application (such as the SystemUI). The push state may include two changes: entering the pushing and exiting the pushing.
h. The OplusPuttmanagerService may integrally manage a logic of the pushing being exited (the pushing being exited may be referred to as exiting the pushing) caused by scenarios such as launching the application from the desktop, launching recent tasks, entering the floating window, or entering a split-screen mode. The logic herein is to exit the application, which is pushed to the outer screen, from the outer screen.

Launching the application from the desktop refers to launching the application by clicking an application icon on the desktop.

In the case that the application is pushed to the outer screen to be displayed, when the application is then launched from the desktop of the inner screen or launched through the recent task card in full-screen or split-screens or launched on the floating window, the application may exit the push state (exit from the outer screen) and may be displayed on the inner screen in full-screen, or in the split-screen, or in the floating window.

Capabilities of the PuttService may be as follows.
a. The PuttService may receive binding and scheduling from the push management service (OplusPuttmanagerService).
b. The PuttService may communicate directly with the shell container of the outer screen and mounts/unmounts the surface view to the shell container. The shell container of the outer screen may be a business module configured to display the outer screen display window and may be used as a container to carry surface view objects. The surface view needs to be placed in a view container of the outer screen, and therefore, the surface view needs to be mounted. The outer screen can have a plurality of view containers. The PuttService needs to find the view container created by the shell container of the outer screen to mount the surface view and place the surface view therein. The outer screen may have a plurality of cards; may move the plurality of cards; and may find the view container created by the shell container of the outer screen.
c. The PuttService may create the surface view of its own and use the surface view to notify the device management service (DisplayManagerService) to create the virtual display.
d. The PuttService may invoke the OplusPuttManagerService to move the task containing the activity from the inner screen to the virtual display.
e. At this moment, the contents carried by the surface view may be the contents of the virtual display, and the contents of the virtual display may be the task containing the activity. Since the surface view is displayed in the shell container of the outer screen, the interface finally seen on the outer screen may be the task containing the activity that is pushed from the inner screen.

The push management service (OplusPuttmanagerService) may be an abstract service concept in software and may be interpreted a module that manages specified business. The PuttService is a service component that inherits from the native Android service components. The OplusPuttManagerService may be used to manage a lifecycle of the PuttService.

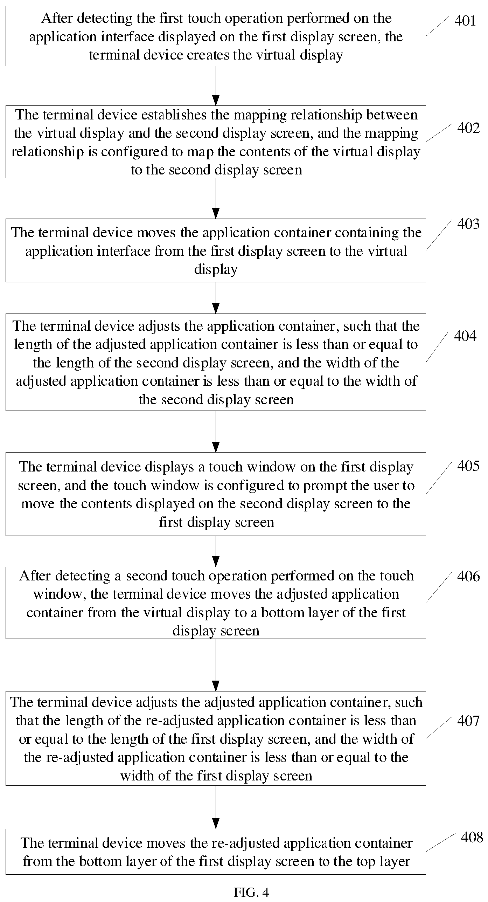

As shown in FIG. 4, FIG. 4 is a flow chart of another interface displaying method according to an embodiment of the present disclosure. As shown in FIG. 4, the method may include the following blocks.
401, After detecting the first touch operation performed on the application interface displayed on the first display screen, the terminal device creates the virtual display.
402, The terminal device establishes the mapping relationship between the virtual display and the second display screen, and the mapping relationship is configured to map the contents of the virtual display to the second display screen.
403, The terminal device moves the application container containing the application interface from the first display screen to the virtual display.
404, The terminal device adjusts the application container, such that the length of the adjusted application container is less than or equal to the length of the second display screen, and the width of the adjusted application container is less than or equal to the width of the second display screen.

Specific implementation of the blocks 401 to 404 may be referred to the description of the blocks 101 to 104 in the above, which will not be repeated here.

405, The terminal device displays a touch window on the first display screen, and the touch window is configured to prompt the user to move the contents displayed on the second display screen to the first display screen.

Specific implementation of the block 405 may be referred to the description in the above, which will not be repeated here.

406, After detecting a second touch operation performed on the touch window, the terminal device moves the adjusted application container from the virtual display to a bottom layer of the first display screen.

In the present embodiment, the second touch operation may include at least one of: a sliding operation and a clicking operation. The sliding operation may include: sliding upward, sliding downward, sliding leftward, or sliding rightward. The clicking operation may include: a single click, a double click, a triple click, or a quadruple click. For example, the second touch operation may be a downward sliding operation.

The first display screen may open a plurality of applications, each of the plurality of applications may correspond to one application container. The application container corresponding to a foreground application may be located at a top layer of the first display screen. The application interface of the foreground application may be seen by the user. Application containers corresponding to background applications cannot be seen by the user.

When the adjusted application container is moved from the virtual display to the bottom layer of the first display screen, the user cannot see the application interface in the adjusted application container on the first display screen, improving a displaying effect of the application interface.

The size of the adjusted application container does not match the size of the first display screen, and therefore, when the adjusted application container is moved from the virtual display to a top layer of the first display screen, the process of changing the size of the application container may be seen on the first display screen during adjusting the size of the adjusted application container in a block 407, such that the displaying effect of the application interface may be affected.

407, The terminal device adjusts the adjusted application container, such that the length of the re-adjusted application container is less than or equal to the length of the first display screen, and the width of the re-adjusted application container is less than or equal to the width of the first display screen.

The size of the adjusted application container may be adjusted again by the push management service (OplusPuttmanagerService).

In the present embodiment, in the case that the device has the plurality of physical display screens, the same application interface may be seamlessly switched across display screens having different sizes and/or different resolutions, display compatibility issues of the application interfaces across different physical display screens may be solved at the systemic level.

The ratio of the length to the width of the first display screen is different from that of the second display screen, the ratio of the length to the width of the virtual display is equal to that of the second display screen, and the area of the virtual display is greater than or equal to the area of the second display screen.

In some embodiments, the block 407 may include the following operations.

(21) The terminal device adjusts the ratio of the length to the width of the adjusted application container to match the ratio of the length to the width of the first display screen.

(22) The terminal device adjusts the scaling factor of the adjusted application container, such that the length of the re-adjusted application container is equal to the length of the first display screen, and the width of the re-adjusted application container is equal to the width of the first display screen.

In the present embodiment, during creating the virtual display, the ratio of the length to the width of the virtual display may be set to match the ratio of the length to the width of the second display screen. When adjusting the size of the application container at a later stage, the ratio of the length to the width of the application container may be directly adjusted according to the ratio of the length to the width of the virtual display. The area of the virtual display is larger than that of the second display screen, ensuring that the virtual display may carry larger application containers.

After adjusting the ratio of the length to the width of the adjusted application container to match the ratio of the length to the width of the virtual display, the scaling factor of the adjusted application container is adjusted to enable the length of the re-adjusted application container to be equal to the length of the first display screen, and to enable the width of the re-adjusted application container to be equal to the width of the first display screen. In this way, the size of the re-adjusted application container matches the size of the first display screen, enabling the contents of the application interface in the application container to fully fill the first display screen without display abnormalities, and a displaying effect when the application interface is pulled back from the second display screen to the first display screen to be displayed may be improved.

408, The terminal device moves the re-adjusted application container from the bottom layer of the first display screen to the top layer.

In the present embodiment, after adjusting the size of the adjusted application container to match the size of the first display screen, the re-adjusted application container is moved from the bottom layer of the first display screen to the top layer, such that the user may view the application interface in the re-adjusted application container on the first display screen, improving the displaying effect of the application interface on the first display screen.

After performing the block 408, the re-adjusted application container may be located at the top layer of the first display screen. The re-adjusted application container may be directly displayed on the first display screen. The re-adjusted application container may alternatively be located in the touch window. When the user pulls down the touch window, re-adjusted application container may be displayed in the touch window.

In some embodiments, after performing the block 408, following operations may be executed.

The terminal device may display a first animation on the first display screen. The first animation is configured to prompt the user to pull the application interface from the touch window back to the first display screen.

In the present embodiment, during pulling the application interface from the touch window back to the first display screen, the first animation may be displayed. The first animation may display an animation effect of pulling the application interface from the touch window back to the first display screen. The first animation may prompt the user that the application interface is being pulled back from the touch window to the first display screen. For example, the first animation may show the application interface sliding downward from the touch window at the top.

The size of the application container has not been adjusted properly after detecting the second touch operation performed on the touch window. Therefore, when no animation is displayed, the process of changing the size of the application interface in the application container may be seen on the first display screen, affecting the displaying effect. Displaying the application interface during displaying the first animation may improve the displaying effect of the application interface being pulled back from the touch window to the first display screen.

In some embodiments, after performing the block 406, the following operations may further be executed.
(31) The terminal device cancels the mapping relationship between the virtual display and the second display screen.
(32) The terminal device destroys the virtual display.

In the present embodiment, after moving the adjusted application container from the virtual display to the bottom layer of the first display screen, the virtual display no longer contains any application container, and the virtual display may not be needed anymore. In order to reduce background resource overhead, the mapping relationship between the virtual display and the second display screen may be canceled, and the virtual display may be destroyed.

The operations (31) and (32) may be executed after "the terminal device displaying the first animation on the first display screen".

In some embodiments, after performing the operation (32), the following operations may further be executed.

The terminal device removes the touch window.

In the present embodiment, after destroying the virtual display, the touch window loses the function of "pulling back the pushing". The touch window may be removed as the handle does not need to be displayed on the first display screen, improving the displaying effect of the first display screen.

After "the terminal device removing the touch window," the second display screen (outer screen) may trigger a return to a master interface of the shell container of the outer screen. The master interface of the shell container of the outer screen may not display any content.

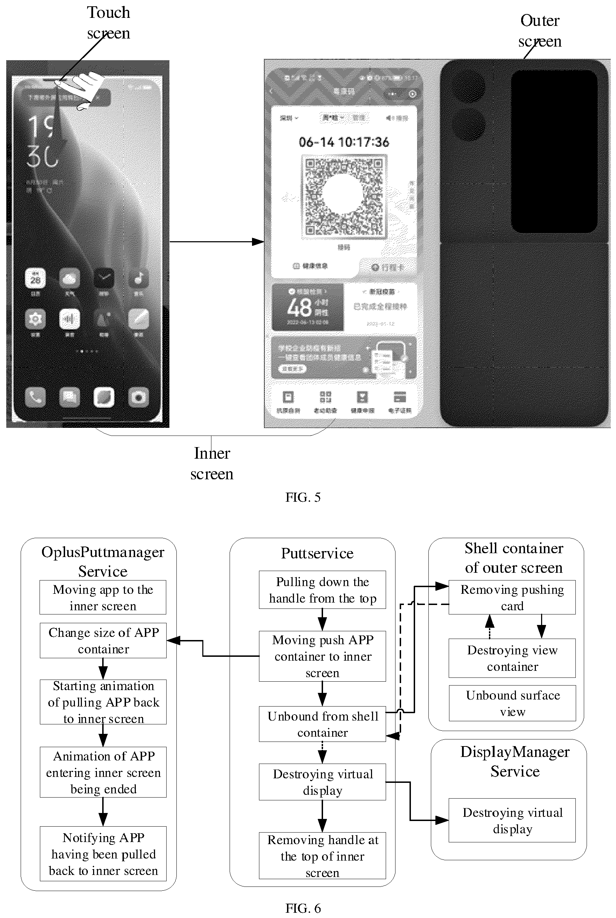

As shown in FIG. 5, FIG. 5 is an interaction schematic view of pulling the application interface displayed on the second display screen back to the first display screen to be displayed according to an embodiment of the present disclosure. In FIG. 5, the terminal device is the foldable phone, and the application interface is the QR code interface.

As shown in FIG. 5, the user may pull down the touch window (handle) at the top of the inner screen to pull the application interface (QR code interface) displayed on the outer screen back to the inner screen to be displayed. The outer screen is off, and the inner screen displays an animation.

As shown in FIG. 6, FIG. 6 is a flow chart of pulling the application interface displayed on the second display screen back to the first display screen to be displayed according to an embodiment of the present disclosure. The process may include the following operations.
(1) The application container (task) corresponding to the application interface (activity) displayed on the outer screen is moved from the virtual display to the bottom position of the inner screen.
(2) The size and scaling factor of the application container (task) are restored.
(3) The application container (task) is pulled back to the foreground.
(4) An entry animation of the application container (task) is created.
(5) The virtual display is destroyed.
(6) The outer screen triggers the return to the master interface of the shell container of the outer screen.

When detecting the second touch operation performed on the touch window, the PuttService pulls down the handle (touch window) at the top of the inner screen, moves the push application container (the application container containing the application interface) to the inner screen, unbinds the surface view from the shell container of the outer screen. The shell container of the outer screen destroys the view surface container. The PuttService may destroy the virtual display through the device management service (DisplayManagerService).

After the PuttService moves the push application container (the application container containing the application interface) to the inner screen, the push management service (OplusPuttmanagerService) moves the application to the inner screen, changes the size of the application container, displays the animation of pulling the application back to the inner screen. After the animation ends, a notification of the application having been pulled back to the inner screen is made.

In the present embodiment, when the size of the first display screen is different form the size of the second display screen, seamless switching of the same application interface being displayed across two display screens having different sizes may be achieved. The display compatibility issues of the application interface across different physical display screens are solved at the systemic level. The application does not need to be specifically adapted for display screens having different sizes (such as for the irregular-shaped display screen), significantly improving the performance of applications on the irregular-shaped display screen and the third-party ecosystem, greatly reducing the workload of adapting the applications to different display screens, and greatly facilitating the expansion and promotion of the third-party application ecosystem.

The technical solutions of the embodiments of the present disclosure are described from the perspective of the method. It can be understood that, to achieve the above functions, the terminal device includes hardware structures and/or software modules corresponding to each function. Any ordinary skilled person in the art should easily realize that, in combination with units and algorithm steps described in the embodiments provided in the present disclosure, the present disclosure may be implemented in the form of hardware or a combination of hardware and computer software. A function being executed by hardware or computer software driving hardware is determined depending on specific applications and design constraints of the technical solution. Any ordinary skilled person in the art may use different methods for each specific application to implement the described functions, and the implementation shall not be considered beyond the scope of the present disclosure.

According to the embodiments of the present disclosure, the terminal device may be divided into functional units according to the above method examples. For example, each function may correspond to a functional unit, or two or more functions may be integrated into one processing unit. The integrated units may be implemented in the form of hardware or software functional units. It should be noted that the division of units in the embodiments of the present disclosure may be schematic and may be performed based on only logical functions. In practice, the device may be divided into units based on other manners.

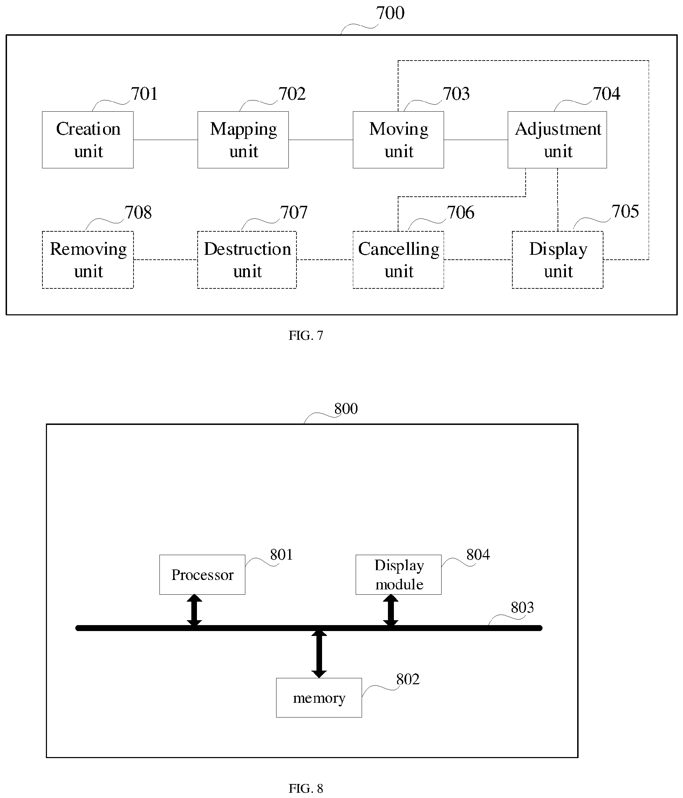

As shown in FIG. 7, FIG. 7 is a structural schematic diagram of an interface displaying apparatus according to an embodiment of the present disclosure. The interface displaying apparatus 700 may be configured in the terminal device and may include a creation unit 701, a mapping unit 702, a moving unit 703, and an adjustment unit 704.

The creation unit 701 is configured to create the virtual display after detecting the first touch operation performed on the application interface displayed on the first display screen.

The mapping unit 702 is configured to establish the mapping relationship between the virtual display and the second display screen, and the mapping relationship is used to map the contents of the virtual display to the second display screen.

The moving unit 703 is configured to move the application container containing the application interface from the first display screen to the virtual display.

The adjustment unit 704 is configured to adjust the application container to enable the length of the adjusted application container to be less than or equal to the length of the second display screen, and enable the width of the adjusted application container to be less than or equal to the width of the second display screen.

In some embodiments, the interface displaying apparatus 700 may further include a display unit 705.

The display unit 705 is configured to display the touch window on the first display screen after the adjustment unit 704 adjusts the application container. The touch window is configured to prompt the user to move the contents displayed on the second display screen to the first display screen.

In some embodiments, the moving unit 703 is further configured to move, after detecting the second touch operation performed on the touch window, the adjusted application container from the virtual display to the bottom layer of the first display screen.

The adjustment unit 704 is further configured to adjust the adjusted application container to enable the length of the re-adjusted application container to be less than or equal to the length of the first display screen, and enable the width of the re-adjusted application container to be less than or equal to the width of the first display screen.

The moving unit 703 is further configured to move the re-adjusted application container from the bottom layer to the top layer of the first display screen.

In some embodiments, the interface displaying apparatus 700 may further include a cancelling unit 706 and a destruction unit 707.

The cancelling unit 706 is configured to cancel the mapping relationship between the virtual display and the second display screen after the adjustment unit 704 moves the adjusted application container from the virtual display to the bottom layer of the first display screen.

The destruction unit 707 is configured to destroy the virtual display.

In some embodiments, the interface displaying apparatus 700 may further include a removal unit 708.

The removal unit 708 is configured to remove the touch window after the destruction unit 707 destroys the virtual display.

In some embodiments, the display unit 705 is further configured to display the first animation on the first display screen after the moving unit 703 moves the re-adjusted application container from the bottom layer to the top layer of the first display screen. The first animation is used to prompt the user to pull the application interface from the touch window back to the first display screen.

In some embodiments, the ratio of the length to the width of the first display screen may be different from the ratio of the length to the width of the second display screen, the ratio of the length to the width of the virtual display may be equal to the ratio of the length to the width of the second display screen, and the area of the virtual display may be greater than or equal to the area of the second display screen. The adjustment unit 704 adjusting the application container to enable the length of the adjusted application container to be less than or equal to the length of the second display screen and to enable the width of the adjusted application container to be less than or equal to the width of the second display screen, may include: adjusting the ratio of the length to the width of the application container to be equal to the ratio of the length to the width of the virtual display; adjusting the scaling factor of the application container to enable the length of the adjusted application container to be equal to the length of the second display screen, and to enable the width of the adjusted application container to be equal the width of the second display screen.

In some embodiments, the adjustment unit 704 adjusting the adjusted application container to enable the length of the re-adjusted application container to be less than or equal to the length of the first display screen and enable the width of the re-adjusted application container to be less than or equal to the width of the first display screen, may include: adjusting the ratio of the length to the width of the adjusted application container to be equal to the ratio of the length to the width of the first display screen; adjusting the scaling factor of the adjusted application container to enable the length of the re-adjusted application container to be equal to the length of the first display screen, and enable the width of the re-adjusted application container to be equal to the width of the first display screen.

In some embodiments, the creation unit 701 creating the virtual display may include: creating the surface view and notifying, through the surface view, the device management service to create the virtual display.

In some embodiments, the mapping unit 702 establishing the mapping relationship between the virtual display and the second display screen may include: binding the surface view to the shell container of the second display screen and directing the contents carried by the surface view to the virtual display.

In some embodiments, the first touch operation may include: sliding the application interface displayed on the first display screen to the first hot zone. The first hot zone is configured to prompt the user to push the application interface to the second display screen for display.

In some embodiments, sliding the application interface displayed on the first display screen to the first hot zone may include: displaying, when the sliding distance of the first touch operation is greater than or equal to the first threshold, the first hot zone on the first display screen; and sliding the application interface displayed on the first display screen to the first hot zone.

In some embodiments, the application interface may include the interface of at least one application.

The creation unit 701, the mapping unit 702, the moving unit 703, the adjustment unit 704, the cancelling unit 706, the destruction unit 707, and the removal unit 708 in the embodiments of the present disclosure may be processors in the terminal device, and the display unit 705 in the embodiments of the present disclosure may be a display module in the terminal device.

Detailed implementation of the interface displaying apparatus 700 shown in FIG. 7 may be referred to the method embodiments shown in FIGS. 1 to 6, which will not be repeated here.

In the embodiments of the present disclosure, the application interface is originally displayed on the first display screen. After moving the application container containing the application interface to the virtual display, the contents of the application interface in the application container on the virtual display may be mapped to the second display screen, such that the application interface originally displayed on the first display screen may be displayed on the second display screen. The length of the application container may be less than or equal to the length of the second display screen, and the width of the application container may be less than or equal to the width of the second display screen. Therefore, when the contents of the application interface in the application container are mapped to the second display screen, interface elements may be incompletely displayed or overlapped with each other. According to the present disclosure, display abnormalities when the application interface is moved from the first display screen to the second display screen may be avoided.

As shown in FIG. 8, FIG. 8 is a structural schematic diagram of a terminal device according to an embodiment of the present disclosure. As shown in FIG. 8, the terminal device 800 may include a processor 801 and a memory 802. The processor 801 and the memory 802 may be connected through a communication bus 803. The communication bus 803 may be a peripheral component interconnect (PCI) bus or an extended industry standard architecture (EISA) bus. The communication bus 803 may include an address bus, a data bus, a control bus, and so on. For ease of representation, only one thick line is used in FIG. 8 to indicate all types of communication buses, but it does not mean that there is only one bus or one type of bus. The memory 802 may be configured to store a computer program, which includes program instructions. The processor 801 may be configured to invoke the program instructions, and the above computer program may include instructions for executing some or all of the blocks in the methods shown in FIGS. 1 to 6.

The memory 802 may be: a read-only memory (ROM) or other types of static storage devices that can store static information and instructions; a random access memory (RAM) or other types of dynamic storage devices that can store information and instructions; or an electrically erasable programmable read-only memory (EEPROM); a compact disc read-only memory (CD-ROM) or other optical disc storage; optical disc storage (including compressed discs, laser discs, optical discs, digital versatile discs, Blu-ray discs, and so on); magnetic disk storage media or other magnetic storage devices; or any other medium that can be used to carry or store desired program codes in the form of instructions or data structures and can be accessed by a computer. However, the memory 802 may not be limited to the above. The memory may exist independently and be connected to the processor through the bus. The memory may alternatively be integrated with the processor.

The terminal device 800 may further include a display module 804, which may include a display panel, a backlight module (a backlight source and a backlight drive circuit), and so on.

In the embodiments of the present disclosure, the application interface is originally displayed on the first display screen. After moving the application container containing the application interface to the virtual display, the contents of the application interface in the application container on the virtual display may be mapped to the second display screen, such that the application interface originally displayed on the first display screen may be displayed on the second display screen. The length of the application container may be less than or equal to the length of the second display screen, and the width of the application container may be less than or equal to the width of the second display screen. Therefore, when the contents of the application interface in the application container are mapped to the second display screen, interface elements may not be incompletely displayed or overlapped with each other. According to the present disclosure, display abnormalities when the application interface is moved from the first display screen to the second display screen may be avoided.

The embodiments of the present disclosure may further provide a computer-readable storage medium. The computer-readable storage medium may store a computer program for electronic data exchange. The computer program may cause the computer to execute some or all of the blocks in any of the interface displaying methods described in the above method embodiments.

It should be noted that, for the sake of simplicity, the above method embodiments are described as a series of operation combinations. However, any ordinary skilled person in the art shall understand that the present disclosure is not limited by a described operation sequence. According to the present disclosure, some operations may be performed in other sequences or simultaneously. In addition, any ordinary skilled person in the art shall understand that the embodiments described in the specification may be preferred embodiments, and the operations and modules involved may not be necessarily required by the present disclosure.

In the above embodiments, the description of the various embodiments have different emphases. Parts that are not described in detail in a certain embodiment may be referred to related descriptions of other embodiments.

In the various embodiments provided in the present disclosure, it should be understood that the disclosed device may be implemented in other ways. For example, the device embodiments described above may only be illustrative. For example, division of units is achieved based on only logical functions. In practice, there may be other division manners. For example, a plurality of units or components may be combined or integrated into another system, or some features may be omitted or not executed. In addition, the displayed or discussed mutual coupling or direct coupling or communicative connection may be achieved through some interfaces, and the indirect coupling or communicative connection of devices or units may be electrical or in other manners.

The units described as separate components may or may not be physically separated. The components displayed as units may or may not be physical units, and that is, the components may be located in one place or distributed to a plurality of network units. Some or all of the units may be selected according to actual needs to achieve the purpose of the solution of the embodiments.

In addition, the functional units in the various embodiments of the present disclosure may be integrated into one processing unit, or each unit may exist physically alone, or two or more units may be integrated into one unit. The above integrated units may be implemented in the form of hardware or software functional units.

When the integrated unit is implemented in the form of a software functional unit and sold or used as an independent product, the integrated unit may be stored in a computer-readable memory. Based on the above understanding, the technical solution of the present disclosure essentially or the part that contributes to the related art or all or part of the technical solution may be embodied in the form of a software product. The computer software product may be stored in a memory and may include a plurality of instructions to enable a computer device (which may be a personal computer, a terminal device, or a network device, and so on) to execute all or part of the blocks of the methods described in the various embodiments of the present disclosure. The aforementioned memory may include: a U disk, a read-only memory (ROM), a random access memory (RAM), a mobile hard drive, a magnetic disk, or an optical disk and other media that can store program codes.

Any ordinary skilled person in the art may understand that all or part of the blocks in the various methods of the above embodiments may be completed by instructing relevant hardware through a program. The program may be stored in a computer-readable memory. The memory may include: a flash disk, a read-only memory, a random access memory, a magnetic disk, or an optical disk, and so on.

The above provides detailed introduction to the embodiments of the present disclosure. Specific examples are used in the present disclosure to explain principles and implementation methods of the present disclosure. The description of the above embodiments is only used to assist understanding the methods and core concepts of the present disclosure. Meanwhile, for any ordinary skilled person in the art, according to the concept of the present disclosure, specific implementation methods and the application scope may be changed. In summary, the contents of the present specification shall not be interpreted as limiting the present disclosure.

## Claims

1. An interface displaying method, comprising:
after detecting a first touch operation performed on an application interface displayed on a first display screen, creating a virtual display; establishing a mapping relationship between the virtual display and a second display screen, wherein the mapping relationship is used to map contents of the virtual display to the second display screen;
moving an application container in which the application interface is contained from the first display screen to the virtual display; and
adjusting the application container to enable a length of the adjusted application container to be less than or equal to a length of the second display screen and enable a width of the adjusted application container to be less than or equal to a width of the second display screen.

2. The interface displaying method according to claim 1, wherein after the adjusting the application container, the method further comprises:
displaying a touch window on the first display screen, wherein the touch window is configured to provide a prompt to move contents displayed on the second display screen to the first display screen.

3. The interface displaying method according to claim 2, wherein after the displaying a touch window on the first display screen, the method further comprises:
moving, after detecting a second touch operation performed on the touch window, the adjusted application container from the virtual display to a bottom layer of the first display screen;
adjusting the adjusted application container to enable a length of the re-adjusted application container to be less than or equal to a length of the first display screen and enable a width of the re-adjusted application container to be less than or equal to a width of the first display screen; and
moving the re-adjusted application container from the bottom layer to a top layer of the first display screen.

4. The interface displaying method according to claim 3, wherein after the moving the adjusted application container from the virtual display to a bottom layer of the first display screen, the method further comprises:
cancelling the mapping relationship between the virtual display and the second display screen; and
destroying the virtual display.

5. The interface displaying method according to claim 4, wherein after the destroying the virtual display, the method further comprises:
removing the touch window.

6. The interface displaying method according to claim 3, wherein after the moving the re-adjusted application container from the bottom layer to a top layer of the first display screen, the method further comprises:
displaying a first animation on the first display screen, wherein the first animation is configured to provide a prompt to pull the application interface from the touch window back to the first display screen.

7. The interface displaying method according to claim 1, wherein a ratio of a length to a width of the first display screen is different from a ratio of the length to the width of the second display screen, a ratio of a length to a width of the virtual display is equal to the ratio of the length to the width of the second display screen, and an area of the virtual display is greater than or equal to an area of the second display screen;
the adjusting the application container to enable a length of the adjusted application container to be less than or equal to a length of the second display screen and enable a width of the adjusted application container to be less than or equal to a width of the second display screen, comprises:
adjusting the ratio of the length to the width of the application container to be equal to the ratio of the length to the width of the virtual display; and
adjusting a scaling factor of the application container to enable a length of the adjusted application container to be equal to the length of the second display screen and to enable a width of the adjusted application container to be equal the width of the second display screen.

8. The interface displaying method according to claim 3, wherein the adjusting the adjusted application container to enable a length of the re-adjusted application container to be less than or equal to a length of the first display screen and enable a width of the re-adjusted application container to be less than or equal to a width of the first display screen, comprises:
adjusting a ratio of the length to the width of the adjusted application container to be equal to a ratio of a length to a width of the first display screen; and
adjusting a scaling factor of the adjusted application container to enable the length of the re-adjusted application container to be equal to the length of the first display screen and enable the width of the re-adjusted application container to be equal to the width of the first display screen.

9. The interface displaying method according to claim 1, wherein the creating a virtual display, comprises:
creating a surface view and notifying, through the surface view, a device management service to create the virtual display.

10. The interface displaying method according to claim 9, wherein the establishing a mapping relationship between the virtual display and a second display screen, comprises:
binding the surface view to a shell container of the second display screen and directing contents carried by the surface view to the virtual display.

11. The interface displaying method according to claim 1, wherein the first touch operation comprises: sliding the application interface displayed on the first display screen to a first hot zone; the first hot zone is configured to provide a prompt to push the application interface to the second display screen to be displayed.

12. The interface displaying method according to claim 11, wherein the sliding the application interface displayed on the first display screen to a first hot zone, comprises:
displaying, in a case that a sliding distance of the first touch operation is greater than or equal to the first threshold, the first hot zone on the first display screen; and sliding the application interface displayed on the first display screen to the first hot zone.

13. The interface displaying method according to any one of claims 1 to 12, wherein the application interface comprises an interface of at least one application.

14. An interface displaying apparatus, comprising:
a creation unit, configured to create, after detecting a first touch operation performed on an application interface displayed on a first display screen, a virtual display;
a mapping unit, configured to establish a mapping relationship between the virtual display and a second display screen, wherein the mapping relationship is used to map contents of the virtual display to the second display screen;
a moving unit, configured to move an application container in which the application interface is contained from the first display screen to the virtual display; and
an adjustment unit, configured to adjust the application container to enable a length of the adjusted application container to be less than or equal to a length of the second display screen and enable a width of the adjusted application container to be less than or equal to a width of the second display screen.

15. The interface displaying apparatus according to claim 14, further comprising a display unit, configured to: display a touch window on the first display screen, wherein the touch window is configured to provide a prompt to move contents displayed on the second display screen to the first display screen.

16. The interface displaying apparatus according to claim 15, wherein,
the moving unit is further configured to move, after detecting a second touch operation performed on the touch window, the adjusted application container from the virtual display to a bottom layer of the first display screen;
the adjustment unit is further configured to adjust the adjusted application container to enable a length of the re-adjusted application container to be less than or equal to a length of the first display screen and enable a width of the re-adjusted application container to be less than or equal to a width of the first display screen; and
the moving unit is further configured to move the re-adjusted application container from the bottom layer to a top layer of the first display screen.

17. The interface displaying apparatus according to claim 16, further comprising a cancelling unit and a destruction unit, wherein,
the cancelling unit is configured to cancel the mapping relationship between the virtual display and the second display screen; and
the destruction unit is configured to destroy the virtual display.

18. The interface displaying apparatus according to claim 16, wherein the display unit is further configured to display a first animation on the first display screen, wherein the first animation is configured to provide a prompt to pull the application interface from the touch window back to the first display screen.

19. A terminal device, comprising: a first display screen, a second display screen, a processor and a memory; wherein the first display screen, the second display screen, and the memory are coupled to the processor; the memory is configured to store a computer program, the computer program comprises program instructions, the processor is configured to invoke the program instructions to perform the method according to any one of the claims 1 to 13.

20. A computer readable storage medium, having a computer program stored thereon, wherein the computer program comprises program instructions; the program instructions, when being executed by a processor, are configured to cause the processor to perform the method according to any one of claims 1 to 13.
